# EUROPÄISCHE PATENTSCHRIFT

(11) **EP 0 525 430 B1**
(45) Veröffentlichungstag und Bekanntmachung des Hinweises auf die Patenterteilung: **13.12.1995**
(21) Anmeldenummer: 92111219.9
(22) Anmeldetag: 02.07.1992
(51) Int. Cl.: B01D 5/00, C21D 1/76

(54) **Verfahren zur Reinigung oder auch Aufbereitung von Gasen**
Process for purifying and/or preparing gases
Procédé pour la purification et/ou la préparation de gaz

(30) Priorität: 30.07.1991 DE 4125215
(43) Veröffentlichungstag der Anmeldung: 03.02.1993
(73) Patentinhaber: Linde Aktiengesellschaft, 65189 Wiesbaden (DE)
(72) Erfinder: Wandke, Ernst, Dr. Dipl.-Ing., W-8192 Geretsried (DE); Strigl, Reinhard, Dipl.-Ing., W-8000 München 50 (DE)
(74) Vertreter: Schaefer, Gerhard, Dr.

(56) Entgegenhaltungen:
- EP-A- 0 124 997
- DE-A- 2 411 601
- DE-A- 3 742 685
- GB-A- 2 082 634

## Beschreibung

Die Erfindung betrifft ein Verfahren zur Reinigung oder auch Aufbereitung von Gasen in kleineren Quantitäten bis ca. 300 cbm/h, z.B. und insbesondere der abfließenden Schutz- oder Reaktionsgase aus Wärmebehandlungen für Metalle, im wesentlichen durch Abkühlung und tiefkaltes Auskondensieren und/oder Ausfrieren unter Ausnutzung der Kälte eines Kälteträgers.

Beispielsweise bei Wärmebehandlungen metallischer Werkstücke unter Gasatmosphären - z.B. dem Gasaufkohlen von Stahlteilen oder dem Glühen verschiedenster Metalle - werden die Schutz- bzw. Reaktionsgase angewendet und in der Regel nach einmaligem Ofendurchlauf verworfen. Häufig werden diese Behandlungsgase - oder Mischungsanteile davon - zudem als Flüssiggase, vorrätig gehalten und bereitgestellt. Im Betrieb ist dann zunächst das Flüssiggas mit Umgebungswärme in einem sog. Luftwärmetauscher zu verdampfen, ggfs. mit weiteren Gasen zu mischen und schließlich der Wärmebehandlung zuzuführen (siehe hierzu z.B. HTM 35(1980) Nr.6, S.284 bis 288, Artikel "Schutzgasatmosphäreren auf Stickstoffbasis"). Die im Flüssiggas enthaltene Kälte bleibt dabei also ungenutzt.

Analoge Bedingungen, d.h. Nutzung eines tiefkalt als Flüssiggas bereitgestellten Mediums als Gas ohne Ausnutzung der "mitgelieferten" Kälte sind auch in anderen technischen Gebieten, z.B. beim Inertisieren von Anlagen, gegeben.

In all diesen Fällen werden also beträchtliche Gasmengen angewendet, um bestimmte Bedingungen zu erhalten, und anschließend das Gas verworfen, und das obgleich das aus der Nutzung austretende Gas keine extremen Verunreinigungen aufweist. Dabei wäre in vielen Fällen - bei Durchführung einer entsprechenden Reinigung dieser Abgase - eine Weiter- oder Wiedervervendung dieser Gase möglich.

Dahingehende Vorschläge sind auch bereits gemacht worden, diese sind jedoch, da Gasreinigungen bislang vor allem im Hinblick auf großtechnische Einsätze konzipiert wurden, für die hier angesprochenen kleineren Gasmengen aufgrund des erforderlichen Aufwands und ihrer Kompliziertheit nicht günstig. Auch die diesem Gedanken folgende DE-OS 37 42 685 beinhaltet eine relativ aufwendige Einrichtung und Verfahrensweise zur Gasreinigung, die auf zwei abwechslungsweise schaltbaren Kondensatoren beruht, von denen sich jeweils einer im Kondensations- und Ausfrierbetrieb befindet, während der zweite in seiner Abschaltphase regeneriert wird, d.h. von auskondensierten und ausgefrorenen Stoffen befreit wird.

Ebenso wie die DE-OS 37 42 685 enthält auch die GB-A 2 082 634 eine Doppelkondensator-Gasreinigung, die in Verbindung mit der Wärmebehandlung metallischen Gutes eingesetzt wird und bei der ein unerwünscht H₂O und CO₂ enthaltendes Gasgemisch von eben diesen Bestandteilen durch Ausfrieren befreit wird. Dabei ist auch eine der Tiefkaltausfrierung vorgeschaltete Vorkühlung vorgesehen, in der jedoch keine Medienabtrennung erfolgt. Alle abzureinigenden Komponenten sammeln sich daher im jeweils aktiven der beiden Kondensatoren an, der sich somit schnell zusetzt.Diese Kondensatoren sind im übrigen so zu gestalten, daß die Gasverunreinigungen möglichst weitgehend in ihnen zurückgehalten werden. Derartige Kondensatoren sind daher entsprechend aufwendig zu gestalten und zu verschalten.

Ferner ist aus der EP-A 0 124 997 ein Lösungsmittelrückgewinnungsverfahren bekannt, bei dem lösungmittelhaltiges Rohgas zu reinigen ist und bei dem ein verflüssigbarer Rohgasanteil vorausgehend einer Tiefkaltkondensation auskondensiert und abgetrennt wird.

Die Aufgabenstellung zu vorliegender Erfindung besteht nunmehr darin, ein Gasreinigungsverfahren gemäß dem oberbegriff des Anspruchs 1 anzugeben, das mit möglichst einfacher Betriebsweise und Ausgestaltung eine gute Reinigungsqualität erzielt und das insbesondere bereits die erste Abkühlphase nutzbringend anwendet.

Diese Aufgabe wird erfindungsgemäß dadurch gelost, daß zunächst in einer ersten Abkühlstufe die wesentlichsten Verunreinigungen mit der höchsten Verflüssigungs- bzw. Verdampfungstemperatur, z.B. Wasser und entsprechende, unter mäßiger Kälte auskondensiert und vom Gasstrom abgetrennt werden, daß dann die Tiefkaltkondensation und/oder - ausfrierung ausgeführt wird
und daß abschließend das so erhaltene Gas gefiltert wird, wobei die Filterung auf etwa dem Temperaturniveau der Tiefkaltkondensation oder -ausfrierung, durchgeführt wird.

Ferner ist es besonders vorteilhaft, wenn das Verfahren so ausgeführt wird, daß in den Reinigungsstufen mechanische Mittel vorgesehen und betrieben werden, die ein Zusetzen der zugehörigen Einheit mit auskondensierten oder ausgefrorenen Stoffen verhindern, und/oder wenn entsprechende, konstruktive Maßnahmenergriffen sind.

Durch die dreistufig ausgeführte Reinigung sind die aus dem Gasstrom abgetrennten Stoffe ebenso in drei Gruppen aufgeteilt, wobei es dann möglich ist, diese aus der jeweiligen Reinigungsstufe zu entfernen. Die erste Reinigungsstufe ist so ausgelegt, daß nur flüssige Medien ausfallen, die aufgrund ihrer Fließeigenschaft und der Schwerkraft nach unten fließen und so auf einfache Weise aus dem zugehörigen Abscheider ausgebracht werden. In der zweiten Stufe werden aufgrund der dort angestrebten Ausfrierung nur feste Partikel in vergleichsweise geringem Umfang abgeschieden (Wasseranteile sind bereits abgetrennt!), wobei mit Vorzug durch geeignete, konstruktive Ausbildung des zugehörigen Wärmetauschelements, z.B. durch Einbau eines mechanischen Klopfers, Schwingers oder Kratzers und geeignet dazu gestalteter Wärmetauschflächen mit darunterliegendem Sammelraum, ein Zusetzen desselben im laufenden Betrieb verhindert wird. Grundsätzlich ist in der Tiefkaltreinigungsstufe auch die konventionelle Parallelschaltung zweier Kondensatoren mit zwischenzeitlicher Regeneration jeweils eines Kondensators möglich und mit weniger Aufwand als bisher verbunden, da erfindungsgemäß ja dort keine Wasseranteile mehr auftreten, zur Regeneration also keine so hohe Temperatur mit entsprechender Temperaturführung mehr erforderlich ist.

Bei der als dritte Reinigungsstufe vorgesehenen Filterung, in der vor allem im Gasstrom mittransportierte Feststoffpartikel ausgesondert werden, kann durch zwei wechselweise einsetzbare Sinterfilter die Reinigung des jeweils nicht im Einsatz befindlichen durch Ausblasen mit gasförmigem Kältemittel oder Druckluft erfolgen.

In günstiger Weise wird der in den erfindungsgemäßen Reinigungsstufen vorhandene Kältebedarf durch geeignete Mengenzuleitung von Kälteträger, also z.B. geeignete Mengenzuleitung von tiefkaltem Flüssiggas, z.B. Flüssigstickstoff, gedeckt. Die auf die Menge gerichtete Regelung insbesondere von Flüssiggasen ist problemlos, wobei bei variierenddem Kältebedarf auch ohne Schwierigkeiten die Flüssiggasmenge variiert werden kann.

Prinzipiell ist Flüssigsstickstoff aufgrund seiner tiefen Verflüssigungstemperatur (-196°C) ein hervorragender Kälteträger und zudem, aufgrund seiner inerten Eigenschaften, ein in vielen Fällen vorteilhaft anwendbares Medium. Ähnliches gilt auch für flüssiges Argon. Es kann jedoch auch die Anwendung weiterer Flüssiggase in anderen, speziellen Anwendungsfällen vorteilhaft sein, z.B. die von Flüssigluft.

Mit größtem Vorteil wird der Kälteträger nach seiner Nutzung als Kältelieferant selbsverständlich einer weiteren Anwendung zugeführt und so eine Doppelnutzung erzielt.

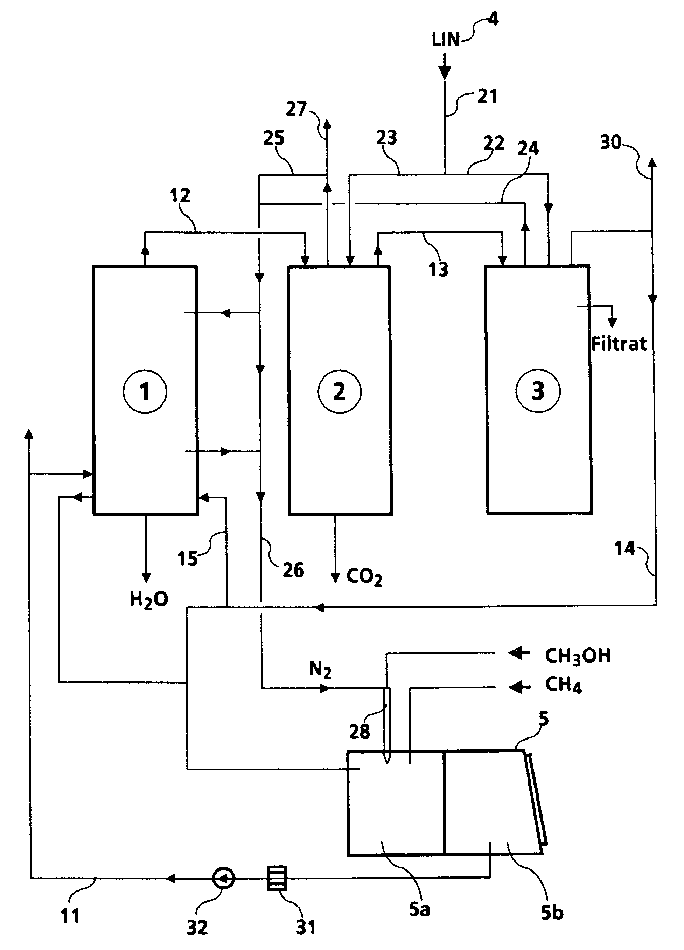

Anhand der Figur soll die Erfindung im folgenden beispielhaft näher erläutert werden.

Ausgangspunkt ist eine Aufkohlungs-Wärmebehandlung stählerner Werkstücke in einer Gasatmosphäre. Dazu sind die Werkstücke in der Regel mehrere Stunden einer Kohlenstoff liefernden Gasatmosphäre bei Temperaturen von 750 bis 1050°C auszusetzen. Im Verlauf der Aufkohlung ist der zugehörigen Ofenanlage, beispielsweise einem Kammerofen oder auch einer Durchlaufanlage, laufend Reaktionsgas zuzuführen. Dieses Aufkohlungsgas ist z.B. ein aus Stickstoff und Methanol bei Ofentemperaturen sich ergebendes Gasgemisch bestehend aus 40% N₂, 40% H₂ und 20% CO, dessen Aufkohlungspotential z.B. durch Erdgaszugabe auf den gewünschte Wert eingestellt wird. Im Behandlungsofen befindet sich aufgrund der ablaufenden Aufkohlungsreaktionen letzlich ein Reaktionsgasgemisch aus

2N₂ + 2H₂ + CO + aCO₂ +bH2O + cCH₄

Vor allem die Anteile an CO₂ und H₂O in den den Ofen verlassenden (Ab-)Gasen sind dabei diejenigen, die einer Wieder- oder Weiterverwendung des Gasgemisches bei der gleichen oder benachbart durchzuführenden Aufkohlungen entgegenstehen. Gewöhnlich wird deshalb das den Aufkohlungssofen verlassende Gas verworfen, d.h.einer Abfackelstation zugeführt, dort verbrannt und auf diese Weise ohne weitere Verwendung entsorgt. Erfindungsgemäß werden nun jedoch die unerwünschten Verbindungen aus dem Ofenabgas in drei Reinigungsstufen wie im folgenden dargestellt entfernt:

Die Figur zeigt hierzu eine entsprechende Anlage mit einem Vorabscheider 1, einem Hauptabscheider 2 einer Filtereinheit 3, einer Flüssigstickstoffversorgung 4, einem Kammerofen 5 mit Behandlungskammer 5a und Vorkammer 5b sowie die notwendigen Verbindungsleitungen 11 bis 15 für das Ofengas einerseits und für den Stickstoff, 21 bis 27, andererseits.

Der erfindungsgemäße Betrieb verläuft wie folgt: Dem gezeigten Kammerofen 5 sind beispielsweise 20 m³ pro Stunde im laufenden Aufkohlungsbetrieb zuzuführen. Demzufolge verläßt - bei dichtem Ofen - eine eben solche Menge Gas denselben. In diesem Gas sind bei einer Aufkohlungsbehandlung etwa 0.2% CO₂ und 0.2% H₂O enthalten - bei Glühbehandlungen können diese Anteile sogar erheblich höher sein, was die erfindungsgemäße Verahrensweise aber nicht ausschließt. Das diese Verunreinigungen enthaltende Gasgemisch wird über die Leitung 11 und einer darin angeordneten Pumpe 32 mit Vorkühler 31 dem Vorabscheider 1 zugeführt. Dieser besteht im wesentlichen aus einem Wärmetauscher, der mittels kaltem Stickstoffgas, das vom Hauptabscheider 2 kommt und dem gegfs. auch von der Filtereinheit 3 stammendes Kaltgas zugeführt wird, gekühlt, wobei der Bedarf an Kälte zusätzlich optionsweise durch kaltes, bereits gereinigtes Gas, das über Leitung 15 fließen kann, ergänzbar ist. Die Temperatur im Vorabscheider 1 wird durch Messung und entsprechende Mengenzuleitung so eingestellt, daß sie knapp oberhalb des Gefrierpunktes des Wassers liegt (1 bis 10°C). Dies hat zur Folge, daß im Vorabscheider 1 vor allem der im Ofengas enthaltene Wasserdampf - und, falls vorhanden, vom Kondensationspunkt ähnlich liegende Verbindungen - aus dem Gasstrom auskondensiert werden. Das anfallende Wasser fließt hierbei der Schwerkraft folgend nach unten aus dem Vorabscheider ab.

Über die Verbindungsleitung 12 wird anschließend das weitgehend vom Wasser befreite Ofengas in den Hauptabscheider 2 eingeleitet. In diesem wird durch indirekten Wärmetausch zwischen dem von der Flüssiggasversorgung 4 zugeführten Flüssigstickstoff und dem Ofengas erreicht, daß die CO₂-Anteile aus dem Ofengas ausgeschieden werden, wozu günstigerweise eine Abkühlung der Ofengase auf -80 bis -130°C erfolgt.

In einer vorteilhaften Variante wird der Hauptabscheider 2 so ausgestaltet, daß er vom zu reinigenden Gas von oben nach unten durchströmt wird, wobei der Hauptteil der Abkühlung erfolgt. Im unteren Bereich des Abscheiders wird dann die Gasströmung umgekehrt, weshalb dort im Gasstrom mitgetragene, feste oder auch flüssige Partikel durch Zentrifugalkräfte abgetrennt werden und liegen bleiben. Ein Zufrieren des Abscheiders im Wärmetauschbereich wird dabei zusätzlich durch eingebaute mechanische Klopfer, Vibratoren, Kratzer oder dergleichen verhindert wird, denn durch die so verursachten mechanischen Einwirkungen oder Schwingungen werden sich festsetzende Ablagerungen immer wieder zum Abfallen gebracht und der Schwerkraft und dem Gastrom folgend weitertransportiert und unterhalb der Wärmetauschzone ausgetragen. Diese Ablagerungen können durch die dortige Anordnung einer Schleuse - z.B. einer Doppelschieberoder einer Zellenradschleuse - ausgebracht werden.

Nach verlassen des Hauptabscheiders 2 wird das Ofengas schließlich über Leitung 13 der Filtereinheit 3 zugeführt. Diese scheidet (nochmals) im Gasstrom befindliche feste Partikel aus CO₂ und H₂O und auch andere verbliebene Partikel aus, wobei auf etwa dem gleichen Temperaturniveau gefiltert wird, mit dem auch die Ausfrierung durchgeführt wurde, da ansonsten gefrorene Partikel wieder verdampfen und den zu reinigenden Gasstrom erneut verunreinigen. Das Filterelement 3 selbst wird beispielsweise aus einem gasdurchlässigen, gesinterten Bauteil gebildet und durch Zuleitung von Flüssigstickstoff zu einer entsprechend zu positionierenden Kühlleitung gekühlt.

Eine Reinigung der beschriebenen Sinterfilter kann neben dem oben genannten Prinzip mit zwei abwechselnd betriebenen Filtern auch im sog. Jetverfahren erfolgen, d.h. daß im laufenden Betrieb ein kurzeitiger Gasstrom in Gegenrichtung durch das Filterelement getrieben und so gefilterte Partikel aus diesem in einen Abzug befördert werden. Dafür eignen sich vor allem sogenannte Schlauchfilter.

Das das Filterelement 3 verlassende Gas ist nun weitgehend von allen unerwünschten Bestandteilen, hier also CO₂ und Wasser, befreit. Es kann nun insbesondere auch wieder in der im Kammerofen 5 laufenden Aufkohlung wiederverwendet werden. Etwa die Hälfte des gereinigten Gases, im allgemeinen 30 bis 70%, hier im Beispiel also zirca 10 m³, wird dann über die Leitung 14 und bei Bedarf (Kältebedarf) über die Parallelleitung 15 und den Vorabscheider 1 in die Behandlungskammer 5a des Kammerofens 5 eingeführt.

Demnach sind ebenfalls etwa 10 m³ Reaktionsgas neu zu bilden, das problemlos und vorteilhaft aus dem in den Abscheidern verdampften Flüssigstickstoff sowie Methanol (CH₃OH), das mit Vorteil mit diesem Stickstoff verdüst wird, hergestellbar ist. Der gasförmige Stickstoff wird dazu über Leitung 26 und einem Regelelement der Verdüsungeinrichtung 28 für das Methanol zugeführt. Zusätzlich wird mit einer geringen Menge Erdgas (CH₄) der gewünschte Kohlenstoffpegel eingestellt, wobei dies über eine entsprechende, im Kammerofen angeordnete Sensorik, z.B. einer CO₂- oder Taupunktsmessung, ohne Schwierigkeit geeignet dosiert ausgeführt werden kann.

Durch den in jedem Fall indirekt ausgeführten Wärmetausch in den verschiedenen Reinigungsstufen des erfindungsgemäßen Verfahrens erfolgt keine Vermischung zwischen dem Kältemittel, also dem Flüssigstickstoff, und dem Ofengas. Deshalb kann das verdampfte Kältemittel, also das Stickstoffgas, problemlos weiterverwendet werden. Hinsichtlich der notwendigen Stickstoffmenge, die ja insgesamt über die Leitung 21 zugeführt wird, ist allgemein zu bemerken, daß diese zumindest derart gewählt sein muß, daß die in den Reinigungsstufen mindestens notwendigen tiefen Temperaturen erreicht werden. In günstigen Fällen ist die Stickstoffmenge gerade so eingestellt, daß die für die Kälte notwendige Menge auch gerade zur Bildung neuen Reaktionsgases gebraucht wird. Überschüsse an Stickstoff können jedoch beispielsweise über Leitung 27 abgeführt werden. Im besprochenen Beispiel sind demnach etwa
3 - 4 m³ Stickstoff und
4 - 6 m³ Methanolspaltgas (H2 + CO)
pro Stunde zuzuführen, sowie zusätzlich eine geeignete aber kleinere Menge Erdgas. Insgesamt ergibt sich also eine vom Verbrauch an Rohstoffen und Ausgangsgasen äußerst sparsame Aufkohlung.

Die über die Leitung 30 abgeführte, überschüssige aber gereinigte Gasmenge ist dabei ohne Probleme auch in weiteren, benachbart stattfindenen Wärmebehandlungen, z.B. Glühungen oder ebenfalls Aufkohlungen, einsetzbar. Nicht selten sind ja mehrere Wärmebehandlungseinrichtungen räumlich benachbart zueinander angeordnet, und es kann so mit dem erfindungsgemäßen Verfahren ein noch größerer Nutzen gezogen werden.

Grundsätzlich andere Anwendungsmöglichkeiten der Erfindung sind schließlich beispielsweise die Aufbereitung von mit Generatoren erzeugten Gasgemischen zu hochreinen Behandlungsgasen, die Reinigung von Brennerabgasen, z.B. Abtrennung von CO-Gas vom sonstigen Brennerabgas, sowie auch die Reinigung von Spülgasen aus Tankanlagen - Kohlenwasserstoffabtrennung von Luft - oder auch die Reinigung von aus Inertisierungsanwendungen stammenden Abgasen.

## Patentansprüche

1. Verfahren zur Reinigung oder Aufbereitung eines Gases in kleineren Quantitäten bis ca. 300 cbm/h, z.B. und insbesondere der abfließenden Schutz- oder Reaktionsgase aus Wärmebehandlungen für Metalle,
bei dem zunächst eine Vorkühlung des zu reinigenden Gases durchgeführt wird und dann eine Tiefkaltkondensation und/oder -ausfrierung der Verunreinigungen erfolgt,
wobei der Kältebedarf durch die indirekte Kälte eines Kälteträgers, beispielsweise eines oder mehrerer tiefkalter Flüssiggase, gedeckt wird,
dadurch gekennzeichnet,
daß zunächst in einer ersten Abkühlstufe die wesentlichsten Verunreinigungen mit der höchsten Verflüssigungs- bzw. Verdampfungstemperatur, z.B. Wasser und entsprechende, unter mäßiger Kälte auskondensiert und aus dem Gasstrom entfernt werden,
dann die Tiefkaltkondensation und/oder -ausfrierung ausgeführt wird
und daß abschließend das so erhaltene Gas gefiltert wird, wobei die Filterung auf etwa dem Temperaturniveau der Tiefkaltkondensation oder -ausfrierung, durchgeführt wird.

2. Verfahren nach Anspruch 1, dadurch gekennzeichnet, daß in der Tiefkaltreinigungsstufe mechanische Mittel wie Klopfer, Kratzer und dergleichen vorgesehen und betrieben werden, die ein Zusetzen der zugehörigen Einheit mit auskondensierten oder ausgefrorenen Stoffen verhindern.

3. Verfahren nach einem der Ansprüche 1 bis 2, dadurch gekennzeichnet, daß der in den Reinigungsstufen vorhandene Kältebedarf durch geeignete Mengenzuleitung des vorhandenen Kälteträgers gedeckt wird.

4. Verfahren nach einem der Ansprüche 1 bis 3, dadurch gekennzeichnet, daß der Kälteträger nach seiner Nutzung als Kältelieferant einer weiteren Anwendung zugeführt wird.

## Claims

1. Process for purifying or preparing a gas in fairly small quantities up to approx. 300 cbm/h for example and in particular the discharging shielding or reaction gases from heat treatments for metals, whereby firstly the gas to be purified is subjected to preliminary cooling and then the impurities are separated by low-temperature condensing and/or freezing, the cold requirement being covered by the indirect cold of a cold-conveying medium, for example one or more liquid gases at low temperature, characterised in that firstly in a first cooling stage the major impurities with the highest liquefaction or evaporation temperature, e.g. water and corresponding substances, are separated by condensing applying moderate cold, and removed from the stream of gas, then the separation by low-temperature condensing and/or freezing is carried out, and finally the gas so obtained is filtered, the filtering being carried out at roughly the temperature level of the separation by low-temperature condensing or freezing.

2. Process according to claim 1, characterised in that mechanical means such as beaters, scrapers and the like are provided and operated in the low-temperature purifying stage which prevent clogging of the unit concerned with separated condensed or frozen substances.

3. Process according to one of claims 1 to 2, characterised in that the cold requirement in the purifying stages is covered by introducing suitable quantities of the cold-conveying medium present.

4. Process according to one of claims 1 to 3, characterised in that after its use as supplier of cold, the cold-conveying medium is sent for further use.

## Revendications

1. Procédé de purification et/ou d'élaboration de gaz en petites quantités atteignant jusqu'à environ 300 m³/heure, par exemple et notamment des gaz de protection et/ou des gaz réactionnels ressortant lors des traitements thermiques des métaux,
dans lequel, tout d'abord, on effectue un refroidissement préliminaire du gaz à purifier et on procède, sous froid poussé ensuite à une condensation et/ou à une congélation des impuretés,
le besoin en froid étant couvert par apport indirect de froid d'un porteur de froid, par exemple d'un ou de plusieurs gaz liquéfiés fortement refroidis,
caractérisé en ce que:
- tout d'abord, dans une première étape de refroidissement, les impuretés essentielles présentant la température de liquéfaction et/ou d'évaporation la plus élevée, par exemple l'eau et les dérivés correspondants, sont condensés par un refroidissement modéré et éliminés du courant gazeux;
- ensuite, on entreprend la condensation et/ou la congélation sous froid poussé; et ensuite
- le gaz ainsi obtenu est filtré, la filtration étant mise en oeuvre approximativement dans le même domaine de température que la condensation ou de la congélation à très basse température.

2. Procédé selon la revendication 1, caractérisé en ce que, dans l'étape de purification à très basse température, sont prévus et mis en oeuvre des moyens mécaniques qui empêchent une obstruction de l'unité correspondante par des matières condensées ou congelées.

3. Procédé selon l'une quelconque des revendications 1 à 2, caractérisé en ce que les besoins en froid apparaissant dans les étapes de purification sont couverts par une introduction quantitative adéquate du porteur de froid disponbible.

4. Procédé selon l'une quelconque des revendications 1 à 3, caractérisé en ce que le porteur de froid est, après son utilisation comme réfrigérant conduit à une autre utilisation.
